# EUROPEAN PATENT APPLICATION

(11) **EP 4 418 433 A1**
(43) Date of publication of application: **21.08.2024**
(21) Application number: 22946455.7
(22) Date of filing: 17.08.2022
(51) Int. Cl.: H01M 50/342

(54) **PRESSURE RELIEF STRUCTURE, BATTERY CELL, BATTERY AND ELECTRIC DEVICE**

(30) Priority: 15.06.2022 CN 202221489520 U
(71) Applicant: Contemporary Amperex Technology Co., Limited, Ningde, Fujian 352100 (CN)
(72) Inventor: QIAN, Ou, Ningde, Fujian 352100 (CN); LI, Yao, Ningde, Fujian 352100 (CN); CHEN, Xiaobo, Ningde, Fujian 352100 (CN); YANG, Piaopiao, Ningde, Fujian 352100 (CN); GU, Mingguang, Ningde, Fujian 352100 (CN)
(74) Representative: Laufhütte, Dieter
(86) International application number: PCT/CN2022/112954
(87) International publication number: WO 2023/240782

(57) **Abstract**

The present application relates to a pressure relief structure, comprising a carrier substrate (241), the carrier substrate (241) having a pressure relief portion (243) and a remaining area (244) other than the pressure relief portion (243), with the thickness of the pressure relief portion (243) being smaller than that of the remaining area (244). The ratio of the thickness of the pressure relief portion (243) to the length of the carrier substrate (241) in a first direction is denoted as A, where A is greater than 5.6 × 10⁻⁶ and less than 0.028, and/or the ratio of the thickness of the pressure relief portion (243) to the width of the carrier substrate (241) in a second direction is denoted as B, where B is greater than 5 × 10⁻⁵ and less than 0.1. The first direction, the second direction and a thickness direction of the pressure relief portion (243) intersect with each other.

## Description

### Cross-Reference to Related Applications

The present application refers to Chinese patent application no. 202221489520X, filed on June 15, 2022, and entitled "Pressure Relief Structure, Battery Cell, Battery, and Power Consuming Device", which is incorporated herein by reference in its entirety.

### Technical Field

The present application relates to the technical field of batteries, and more particularly to a pressure relief structure, a battery cell, a battery, and a power consuming device.

### Background

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In some cases, in order to improve the safety performance of a battery, a pressure relief portion is provided on the housing of the battery to form a pressure relief mechanism. In case of a high pressure in the housing of the battery, a pressure relief channel is presented to release the pressure of the battery, so as to enable directional pressure relief, thus preventing the battery from nondirectional pressure relief or even explosion which leads to unpredictable hazards.

However, during relative deformation of the pressure relief mechanism, a carrier substrate that carries the pressure relief mechanism may also be deformed, so that when the pressure relief mechanism is not opened, the carrier substrate may have exceeded the safety threshold of its deformation easily and thus detonated, which affects the safety of the battery.

### Summary

In view of this, the present application provides a pressure relief structure, a battery cell, a battery, and a power consuming device.

In a first aspect, the present application provides a pressure relief structure, including a pressure relief structure and a carrier substrate, the carrier substrate having a pressure relief portion and a remaining area other than the pressure relief portion, the thickness of the pressure relief portion being smaller than that of the remaining area of the carrier substrate. The ratio of the thickness of the pressure relief portion to the length of the carrier substrate in a first direction is denoted as A, and the ratio of the thickness of the pressure relief portion to the width of the carrier substrate in a second direction is denoted as B. The pressure relief structure meets at least one of the conditions 5.6 × 10⁻⁶ < A < 0.028 and 5 × 10⁻⁵ < B < 0.1. The first direction, the second direction and a thickness direction of the pressure relief portion intersect with each other.

In this way, according to the present application, the ratio of the thickness of the pressure relief portion to the dimensions of the carrier substrate is controlled, ensuring that the pressure relief portion is able to release pressure normally according to a set pressure relief condition, ensuring that during deformation of the pressure relief structure, the carrier substrate does not exceed a safety threshold of its deformation before pressure relief by the pressure relief portion while preventing the pressure relief portion from being too thin or too thick. The carrier substrate is prevented from detonation before valve opening for pressure relief by the pressure relief portion, which causes the pressure relief structure to fail to work and affects the safety of the battery.

In some embodiments, the ratio of the thickness of the pressure relief portion to the thickness of the remaining area of the carrier substrate other than the pressure relief portion is C, where 0.005 < C < 0.8, achieving local thickening of the carrier substrate while ensuring that the pressure relief portion is able to release pressure normally according to the set pressure relief condition. In this way, the overall structural strength of the remaining area of the carrier substrate other than the pressure relief portion can be improved.

In some embodiments, the thickness of the pressure relief portion ranges from 0.01 mm to 0.5 mm, and the thickness of the carrier substrate in the remaining area ranges from 0.2 mm to 2 mm. Therefore, the following disadvantages are avoided: it is difficult for the manufacturing process to meet the demands of an excessively thin pressure relief portion, and the excessively thin pressure relief portion is prone to crack due to expansion and extrusion in the process of manufacture and transportation. Meanwhile, the pressure relief portion or the carrier substrate may not be too thick to break through by a gas, so as to ensure that the pressure relief portion can effectively release pressure in a timely manner.

In some embodiments, the carrier substrate is provided with a recess, a bottom wall of the recess forming the pressure relief portion, so that the carrier substrate is of a relatively simple structure.

In some embodiments, the pressure relief structure further includes a support assembly, the support assembly being arranged facing the carrier substrate, and at least one pressure relief channel is formed between the pressure relief portion and the support assembly for pressure relief of the gas discharged by the pressure relief portion.

In some embodiments, the support assembly includes an isolation board, the isolation board facing the carrier substrate and being spaced apart from the carrier substrate, and a first pressure relief channel is formed between the isolation board and the pressure relief portion, wherein the pressure relief channel includes the first pressure relief channel for pressure relief of the gas discharged by the pressure relief portion.

In some embodiments, the support assembly further includes a support member, the support member being arranged between the isolation board and the carrier substrate. The isolation board and the support member are provided to ensure that the gas discharged by the pressure relief portion can achieve pressure relief normally via a space between the isolation board and the carrier substrate in any state.

In some embodiments, the isolation board is provided with a gas vent that is formed facing the pressure relief portion in a through manner, and a second pressure relief channel is formed between the gas vent and the pressure relief portion, wherein the pressure relief channel includes the second pressure relief channel. A part of an overheated gas in a battery, discharged from the pressure relief portion, is discharged into the atmosphere via the first pressure relief channel, and the other part is discharged from the gas vent into the atmosphere via the second pressure relief channel to ensure smooth pressure relief.

The first pressure relief channel has a preset height in the thickness direction of the pressure relief portion, and the preset height decreases as an orthogonal projection area of the gas vent onto the pressure relief portion increases.

When the orthographic projection area of the gas vent onto the pressure relief portion is less than 1, it means that the gas vent is smaller than the pressure relief portion. At this time, the gas vent has insufficient pressure relief capacity, and the preset height should be increased appropriately to ensure normal pressure relief by the pressure relief portion.

When the orthographic projection area of the gas vent onto the pressure relief portion is greater than or equal to 1, it means that the gas vent is larger than the pressure relief portion. At this time, the gas vent has strong pressure relief capacity, and the preset height may be reduced appropriately to ensure a compact structure of the pressure relief structure.

In some embodiments, the relationship between the preset height and the area of the gas vent is described as: h ≥ -3 × (s/S) + 3, in which h represents the preset height, s represents the orthographic projection area of the gas vent onto the pressure relief portion, and S represents a pressure relief area of the pressure relief portion.

In this way, a complementary relationship is formed between the first pressure relief channel and the second pressure relief channel. When the first pressure relief channel or the second pressure relief channel is too small, the first pressure relief channel and the second pressure relief channel release pressure in parallel. When either of the first pressure relief channel and the second pressure relief channel is enough for the pressure relief portion to release pressure, the other one may be omitted.

In a second aspect, the present application further provides a battery cell, including a housing and a carrier substrate of a pressure relief structure according to the foregoing embodiment, the carrier substrate being configured to form a side face of any side of the housing.

In a fourth aspect, the present application further provides a battery, including an enclosure and a carrier substrate of a pressure relief structure according to the foregoing embodiment, the carrier substrate being configured to form a side face of any side of the housing.

In a fifth aspect, the present application further provides a power consuming device, including a battery according to the foregoing embodiment, the battery being configured to provide electric energy.

Details of one or more embodiments of the present application will be described in the accompanying drawings and the description below. Other features, objectives and advantages of this application will become apparent from the specification, the accompanying drawings and the claims.

### Brief Description of Drawings

In order to more clearly illustrate the technical solutions of the embodiments of the present application, the accompanying drawings required in the embodiments of the present application will be briefly described below. Obviously, the following descriptions are merely some embodiments of the present application, and for those of ordinary skill in the art, other accompanying drawings can be obtained from these accompanying drawings without making creative efforts:
FIG. 1 is a schematic constitution diagram of a vehicle according to an embodiment of the present application;
FIG. 2 is a schematic exploded diagram of a battery according to an embodiment of the present application;
FIG. 3 is a schematic exploded diagram of a battery cell according to an embodiment of the present application;
FIG. 4 is a schematic perspective diagram of a pressure relief structure according to an embodiment of the present application;
FIG. 5 is a schematic perspective diagram of a pressure relief structure according to another embodiment of the present application;
FIG. 6 is a schematic planar diagram of a pressure relief structure according to another embodiment of the present application;
FIG. 7 is a schematic planar diagram of a pressure relief structure according to another embodiment of the present application;
FIG. 8 is a schematic planar diagram of a pressure relief structure according to another embodiment of the present application;
FIG. 9 is a schematic perspective diagram of a pressure relief structure according to another embodiment of the present application;
FIG. 10 is a schematic perspective diagram of a pressure relief structure according to another embodiment of the present application;

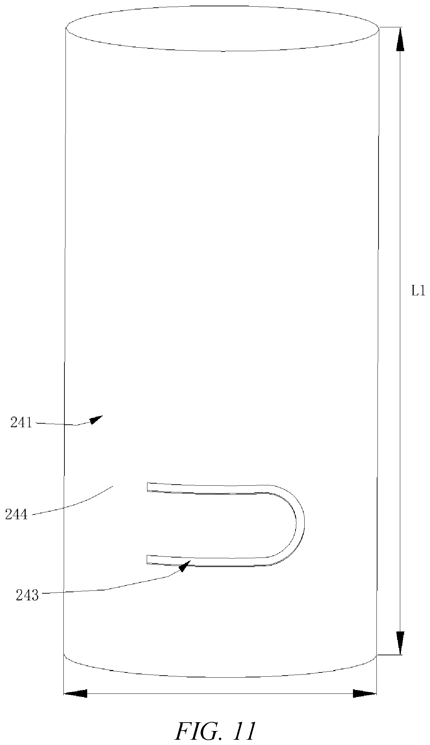

FIG. 11 is a schematic perspective diagram of a pressure relief structure according to another embodiment of the present application;
FIG. 12 is a schematic perspective diagram of a pressure relief structure according to another embodiment of the present application;
FIG. 13 is a schematic perspective diagram of a pressure relief structure according to another embodiment of the present application; and
FIG. 14 is a schematic perspective diagram of a pressure relief structure according to another embodiment of the present application.

### Reference Signs in Detailed Description of Embodiments:

1000 - Vehicle; 100 - Battery; 200 - Controller; 300 - Motor; 10 - Enclosure; 11 - First portion; 12 - Second portion; 20 - Battery cell; 21 - End cap; 211 - Electrode terminal; 22 - Housing; 23 - Electrode assembly; 24 - Pressure relief structure; 241 - Carrier substrate; 243 - Pressure relief portion; 244 - Remaining area; 245 - Isolation board; 2451 - Gas vent; L1 - Length in first direction; L2 - Width in second direction; R - Diameter; h - Preset height.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

The applicant noted that with the continuous expansion of the application field of batteries, the safety of the batteries has become more important. In order to improve the safety performance of a battery, a pressure relief portion is provided on the housing of the battery to form a pressure relief structure. When a battery cell is subject to thermal runaway, high temperature and high pressure may be discharged from the battery cell. At this time, a high-temperature and high-pressure gas may break through the pressure relief structure, so that the pressure relief structure can discharge the high-temperature and high-pressure gas.

A pressure relief portion of a lithium battery is mainly formed by means of scoring on metal or the like. When the battery is heated up to cause a gas inside the battery to expand and the pressure to increase to a certain extent, the score of the pressure relief portion is sealed off to release gas and pressure, so as to prevent the battery from explosion and improve the safety performance of the lithium battery. However, in the process of thermal runaway of the battery, a carrier substrate that carries the pressure relief portion itself may also be deformed.

The traditional lithium battery controls deformation of a pressure relief valve under internal pressure of the housing of the battery by controlling the thickness of the pressure relief portion and the dimensions of the pressure relief portion, without considering deformation of the carrier substrate itself, resulting in that the carrier substrate has exceeded a safety threshold of its deformation and detonated during deformation of the pressure relief portion, so that the pressure relief structure fails to work and the safety of the battery is affected.

In order to alleviate the adverse impact from the deformation of the carrier substrate itself on the pressure relief structure, the applicant found that the thickness of the pressure relief portion itself and the dimensions and/or thickness of the carrier substrate that carries the pressure relief portion can be controlled to ensure that before the pressure relief portion is opened to release pressure, the carrier substrate is within the range of safe deformation without causing the battery to detonate.

Based on the above considerations, in order to alleviate the adverse impact from the deformation of the carrier substrate itself on the pressure relief portion, the applicant has designed a pressure relief structure through in-depth research, which, by limiting the ratio of the thickness of the pressure relief portion to the length and the width of the carrier substrate that carries the pressure relief portion, ensures that the carrier substrate has sufficient carrying capacity before valve opening for pressure relief by the pressure relief portion, so as to ensure that the carrier substrate is within the range of safe deformation.

The pressure relief structure disclosed in the embodiment of the present application may be used to form an end cap of a battery cell. The battery cell manufactured by the pressure relief structure disclosed in the embodiment of the present application may be used in, but not limited to, a power consuming device, such as a vehicle, a ship, or an aircraft. The battery cell, the battery, etc. disclosed in the present application may be used to constitute a power supply system of the power consuming device, which is beneficial to alleviate the problem that the pressure relief structure fails to work and the safety of the battery is affected because the carrier substrate has exceeded the safety threshold of its deformation and detonated during deformation of the pressure relief portion.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

Hereinafter, for the convenience of illustration, a vehicle 1000 is taken as an example to describe an electrical apparatus according to an example of the present application.

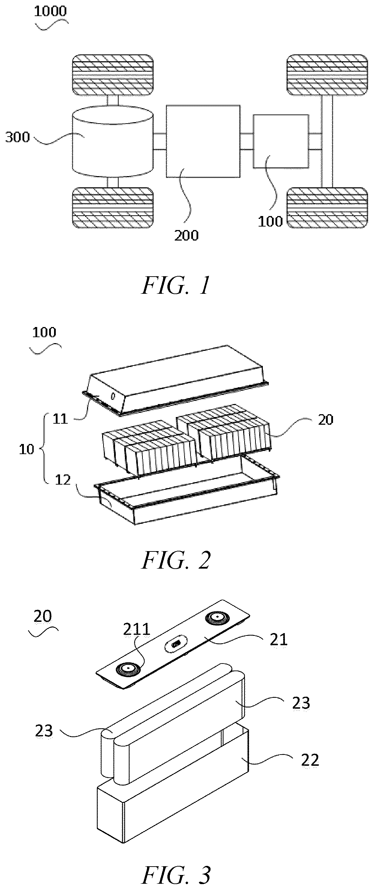

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is an exploded view of the battery 100 according to some embodiments of the present application. The battery 100 includes an enclosure 10 and a battery cell 20. The battery cell 20 is accommodated in the enclosure 10. The enclosure 10 is configured to provide an accommodation space for the battery cell 20, and the enclosure 10 may have various structures. In some embodiments, the enclosure 10 may include a first portion 11 and a second portion 12. The first portion 11 and the second portion 12 are fitted to each other in a covering manner, and the first portion 11 and the second portion 12 jointly define the accommodation space for accommodating the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also each be of a hollow structure with one side open, and an open side of the first portion 11 covers an open side of the second portion 12. Of course, the enclosure 10 formed by the first portion 11 and the second portion 12 may be in various shapes, such as a cylinder and a cuboid.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly connected in series, or in parallel or in a hybrid manner, and then the unit constituted by the plurality of battery cells 20 may be accommodated in the enclosure 10. Of course, the battery 100 may also be formed in the way that the plurality of battery cells 20 are first connected in series or in parallel or in a hybrid manner to form battery modules, the plurality of battery modules are connected in series or in parallel or in a hybrid manner to form a unit, and the unit is accommodated in the enclosure 10. The battery 100 may further include other structures. For example, the battery 100 may further include a busbar component for achieving electrical connections between the plurality of battery cells 20.

Each battery cell 20 may be a secondary battery or a primary battery; or may also be a lithium-sulfur battery, a sodium-ion battery, or a magnesium-ion battery, but is not limited thereto. The battery cell 20 may be in the shape of a cylinder, a flat body, a cuboid, etc.

Referring to FIG. 3, FIG. 3 is a schematic exploded diagram of the battery cell 20 according to some embodiments of the present application. The battery cell 20 refers to a minimum unit that constitutes a battery. As shown in FIG. 3, the battery cell 20 includes an end cap 21, a housing 22, an electrode assembly 23 and other functional components.

The end cap 21 refers to a component that covers an opening of the housing 22 to isolate the internal environment of the battery cell 20 from the external environment. Without limitation, the shape of the end cap 21 may be adapted to the shape of the housing 22 to match the housing 22. The end cap 21 may be made of a material (for example, an aluminum alloy) with a certain hardness and strength. In this way, the end cap 21 is less prone to deformation when subjected to compression and collision, so that the battery cell 20 may have a higher structural strength and the safety performance can also be improved. Functional components, such as electrode terminals 211, may be provided on the end cap 21. The electrode terminals may be used for electrical connection to the electrode assembly 23 for outputting or inputting electric energy of the battery cell 20. In some embodiments, the end cap 21 may also be provided with a pressure relief structure 24 for releasing the internal pressure when the internal pressure or temperature of the battery cell 20 reaches a threshold value. The end cap 21 may also be made of various materials, such as copper, iron, aluminum, stainless steel, an aluminum alloy, plastic, etc., which will not be specially limited in the embodiments of the present application. In some embodiments, an insulating member may also be provided on an inner side of the end cap 21, and the insulating member may be used to isolate electrically connected components in the housing 22 from the end cap 21 to reduce the risk of short circuit. Illustratively, the insulating member may be made of plastic, rubber, etc.

The housing 22 is an assembly that is configured to fit with the end cap 21 so as to create the internal environment of the battery cell 20, wherein the created internal environment may be used for accommodating the electrode assembly 23, an electrolyte and other components. The housing 22 and the end cap 21 may be separate components, the housing 22 may be provided with an opening, and the internal environment of the battery cell 20 is formed by making the end cap 21 cover the opening at the opening. Without limitation, the end cap 21 and the housing 22 may also be integrated with each other. Specifically, the end cap 21 and the housing 22 may form a common connection face before other components are inserted into the housing. When the interior of the housing 22 needs to be packaged, the end cap 21 then covers the housing 22. The housing 22 may have various shapes and various sizes, for example, in the form of a cuboid, a cylinder, a hexagonal prism, etc. Specifically, the shape of the housing 22 may be determined depending on the specific shape and size of the electrode assembly 23. The housing 22 may be made of various materials, such as copper, iron, aluminum, stainless steel, an aluminum alloy, plastic, etc., which will not be specially limited in the embodiments of the present application.

The electrode assembly 23 is a component where an electrochemical reaction occurs in the battery cell 20. The housing 22 may include one or more electrode assemblies 23 therein. The electrode assembly 23 is mainly formed by winding or stacking an anode sheet and a cathode sheet, and a separator is generally arranged between the anode sheet and the cathode sheet. The portions of the anode sheet and the cathode sheet that have the active material constitute a main body portion of the cell assembly, and the portions of the anode sheet and the cathode sheet that have no active material each constitute a tab. An anode tab and a cathode tab may be jointly located at one end of the main body portion together or at two ends of the main body portion, respectively. During the charging and discharging of the battery, an anode active material and a cathode active material react with the electrolyte solution, and the tabs are connected to the electrode terminals to form a current loop.

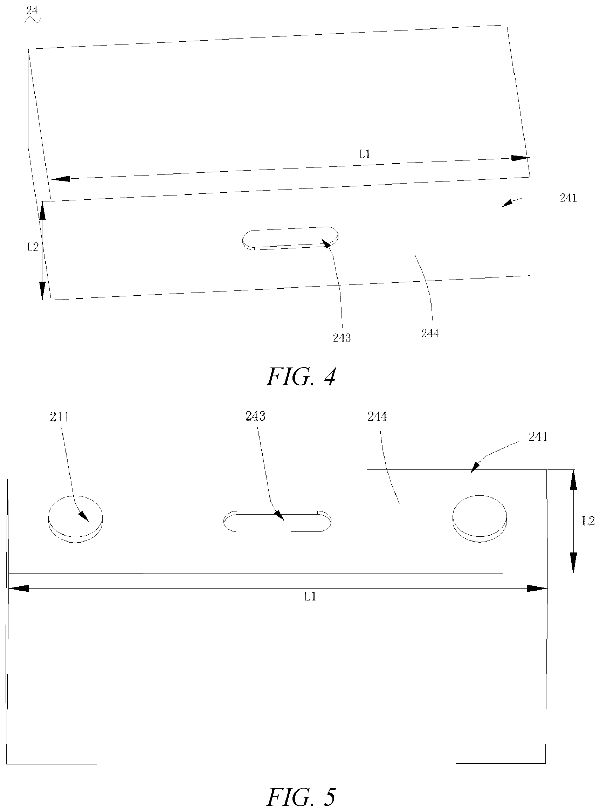

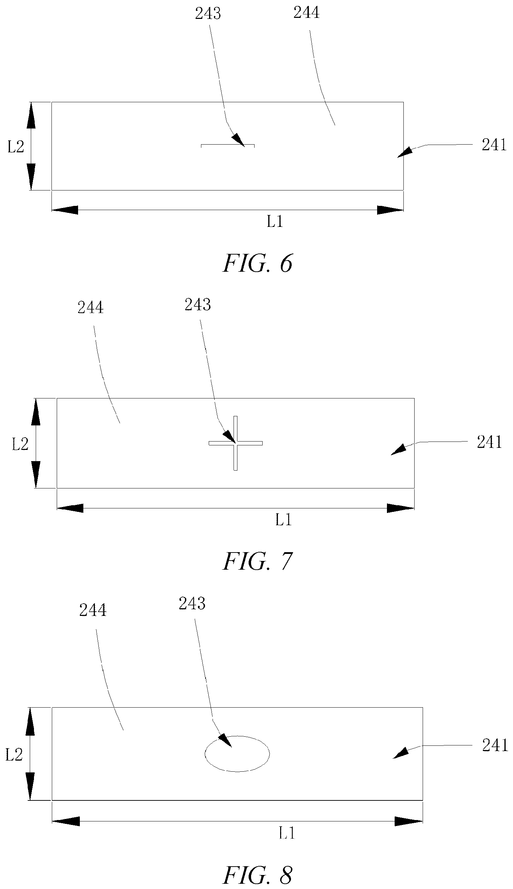

According to some embodiments of the present application, referring to FIGS. 4 and 5, and further referring to FIGS. 6 to 8, the pressure relief structure 24 provided by the present application includes a carrier substrate 241, the carrier substrate 241 having a pressure relief portion 243 and a remaining area 244 other than the pressure relief portion 243, the thickness of the pressure relief portion 243 being smaller than that of the remaining area 244 of the carrier substrate 241. The ratio of the thickness of the pressure relief portion 243 to the length of the carrier substrate 241 in a first direction is denoted as A, the ratio of the thickness of the pressure relief portion 243 to the width of the carrier substrate 241 in a second direction is denoted as B, and the pressure relief structure 24 meets at least one of the conditions 5.6 × 10⁻⁶ < A < 0.028 and 5 × 10⁻⁵ < B < 0.1. The first direction, the second direction and a thickness direction of the pressure relief portion 243 intersect with each other.

The carrier substrate 241, as a substrate structure, is a structural foundation for providing the pressure relief portion 243, may be of a sheet metal structure or a plate-like structure having a certain thickness to ensure that the carrier substrate can be locally thinned to form the pressure relief portion 243. The length in the first direction is L1 as shown in FIGS. 4 to 8, and the width in the second direction is L2 as shown in FIGS. 4 to 8. Generally, the larger side of the carrier substrate 241 is defined as the first direction to ensure that its length is greater than its width.

The pressure relief portion 243 is an area formed by locally thinning the carrier substrate 241, and serves as a pressure relief opening of the carrier substrate 241. The pressure relief portion 243 has poor structural strength due to its small thickness. When the inside of the battery 100 is overheated, the pressure relief portion 243 of the pressure relief structure 24 may crack due to its smaller thickness than the remaining area 244 to cause a high-temperature and high-pressure gas in the battery 100 to be discharged. It can be understood that when the pressure relief structure 24 is subjected to a large external force, the pressure relief portion 243 may be destroyed first to ensure that the carrier substrate 241 cracks at the pressure relief portion 243, so that the cracking process of the carrier substrate 241 is made controllable and the use safety of the carrier substrate 241 is high. Therefore, the structural strength of the pressure relief portion 243 should be lower than the strength of the remaining area 244 of the carrier substrate 241 other than the pressure relief portion 243.

Based on this, the thickness of the pressure relief portion 243 is smaller than that of the remaining area 244 of the carrier substrate 241 other than the pressure relief portion 243 in an internal and external direction of pressure relief of the battery 100, so that the structural strength of the pressure relief portion 243 is lower than that of the remaining area 244, which enables the pressure relief portion 243 to be destroyed first to crack when the pressure relief structure 24 is subjected to a large external force.

In the present application, the pressure relief portion 243 may have a uniform and constant thickness or non-uniform and inconstant thicknesses. When the pressure relief portion 243 has a uniform and constant thickness, the thickness of the pressure relief portion 243 refers to the thickness of any position of the pressure relief portion 243 before pressure relief has not occurred, and when the pressure relief portion 243 has a non-uniform and inconstant thickness, the thickness of the pressure relief portion 243 refers to the thickness of the thinnest position of the pressure relief portion 243 before pressure relief has not occurred, namely, a minimum thickness.

Similarly, the remaining area 244 of the carrier substrate 241 other than the pressure relief portion 243 may have a uniform and constant thickness or non-uniform and inconstant thicknesses. When the remaining area 244 has a uniform and constant thickness, the thickness of the remaining area 244 refers to the thickness of any position of the remaining area 244 of the carrier substrate 241 other than the pressure relief portion 243, and when the remaining area 244 has non-uniform and inconstant thicknesses, the thickness of the remaining area 244 refers to the thickness of the thinnest position of the remaining area 244 of the carrier substrate 241 other than the pressure relief portion 243, namely, a minimum thickness.

The pressure relief structure 24 meets at least one of the conditions 5.6 × 10⁻⁶ < A < 0.028 and 5 × 10⁻⁵ < B < 0.1, which means that the pressure relief structure 24 provided by the present application may meet only 5.6 × 10⁻⁶ < A < 0.028 or only 5 × 10⁻⁵ < B < 0.1 or both of 5.6 × 10⁻⁶ < A < 0.028 and 5 × 10⁻⁵ < B <0.1.

**Table 1**

| No. | A | Results |
|---|---|---|
| 1 | 4 × 10⁻⁶ | Pressure relief portion 243 releases pressure in advance |
| 2 | 5 × 10⁻⁶ | Pressure relief portion 243 releases pressure in advance |
| 3 | 8 × 10⁻⁶ | Pressure relief portion 243 releases pressure normally |
| 4 | 0.0002 | Pressure relief portion 243 releases pressure normally |
| 5 | 0.0003378 | Pressure relief portion 243 releases pressure normally |
| 6 | 0.001 | Pressure relief portion 243 releases pressure normally |
| 7 | 0.0012 | Pressure relief portion 243 releases pressure normally |
| 8 | 0.00135 | Pressure relief portion 243 releases pressure normally |
| 9 | 0.002 | Pressure relief portion 243 releases pressure normally |
| 10 | 0.03 | Pressure relief portion 243 cannot be opened |
| 11 | 0.04 | Pressure relief portion 243 cannot be opened |

Specifically, Table 1 above provides information about pressure relief by the pressure relief portion 243 when the ratio A of the thickness of the pressure relief portion 243 to the length of the carrier substrate 241 in the first direction is within various ranges.

Table 2 below provides information about pressure relief by the pressure relief portion 243 when the ratio B of the thickness of the pressure relief portion 243 to the width of the carrier substrate 241 in the second direction is within various ranges:

**Table 2**

| No. | B | Results |
|---|---|---|
| 1 | 1 × 10⁻⁶ | Pressure relief portion 243 releases pressure in advance |
| 2 | 1 × 10⁻⁴ | Pressure relief portion 243 releases pressure normally |
| 3 | 4 × 10⁻⁴ | Pressure relief portion 243 releases pressure normally |
| 4 | 0.00225 | Pressure relief portion 243 releases pressure normally |
| 5 | 0.00375 | Pressure relief portion 243 releases pressure normally |
| 6 | 0.01 | Pressure relief portion 243 releases pressure normally |
| 7 | 0.06 | Pressure relief portion 243 releases pressure normally |
| 8 | 0.12 | Pressure relief portion 243 cannot be opened |

From Table 1 and Table 2, it can be known that when the pressure relief structure 24 meets either of A less than 5.6 × 10⁻⁶ and B less than 5 × 10⁻⁵, the pressure relief portion 243 releases pressure in advance due to its excessively small thickness, and cannot release pressure according to a set pressure relief condition, resulting in premature pressure relief. When the pressure relief structure 24 meets either of A > 0.028 and B > 0.1, the pressure relief portion 243 cannot be opened normally due to its excessively large thickness. At this time, the remaining area 244 of the carrier substrate 241 other than the pressure relief portion 243 may deform to exceed the safety threshold of its deformation, so that the pressure relief structure 24 fails to work, and the battery 100 may be in danger of detonation.

In this way, the ratio of the dimensions of the carrier substrate 241 to the thickness of the pressure relief portion 243 is controlled to ensure that the pressure relief portion 243 can release pressure normally according to the set pressure relief condition, ensuring that during deformation of the pressure relief structure 24, the carrier substrate 241 does not exceed a safety threshold of its deformation before the pressure relief portion 243 releases pressure while preventing the pressure relief portion from being too thin or too thick. The carrier substrate 241 is prevented from detonation before valve opening for pressure relief by the pressure relief portion 243, which causes the pressure relief structure 24 to fail to work and affects the safety of the battery 100.

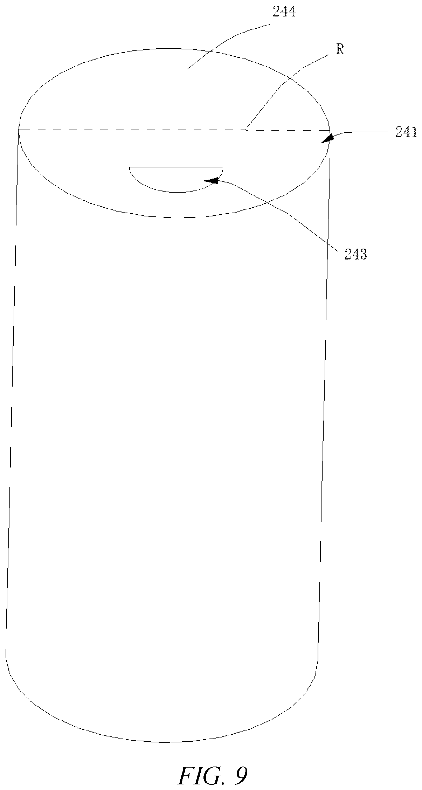

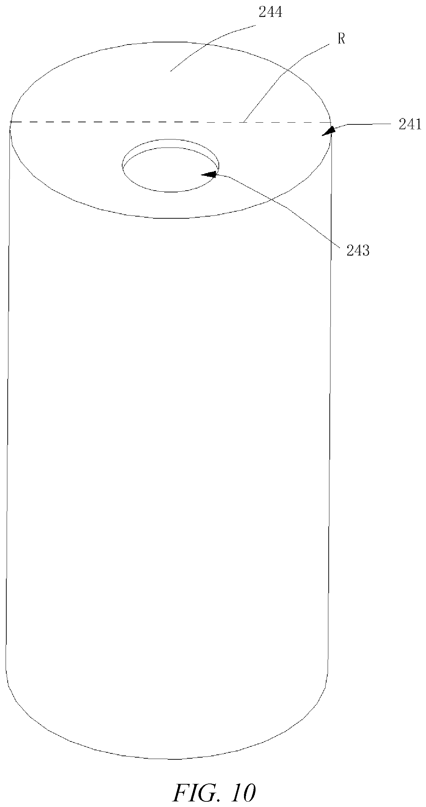

It can be understood that as shown in FIGS. 6 to 8, when the carrier substrate 241 is rectangular, the length in the first direction and the width in the second direction are the length and the width of the rectangle respectively. As shown in FIG. 9 and FIG. 10, when the carrier substrate 241 is circular, both of the length in the first direction and the width in the second direction are the diameter R of the circle. As shown in FIG. 9 and FIG. 10, when the carrier substrate 241 is cylindrical, the length in the first direction and the width in the second direction are the length of a profile line and the diameter R of the cross-section circle of the cylinder respectively.

The pressure relief portion 243 may be circular, elliptical, square, rectangular, linear, etc., which will not be limited in the present application.

In some embodiments, the ratio of the thickness of the pressure relief portion 243 to the thickness of the remaining area 244 of the carrier substrate 241 other than the pressure relief portion 243 is denoted by C, where 0.005 < C < 0.8.

By making the thickness of the pressure relief portion 243 and the thickness of the remaining area 244 of the carrier substrate 241 meet a certain ratio, the carrier substrate 241 is locally thickened (relative to the pressure relief portion 243). In this way, the overall structural strength of the remaining area 244 of the carrier substrate 241 other than the pressure relief portion 243 can be improved.

It should be noted that since the ratio of the thickness of the pressure relief portion 243 to the thickness of the remaining area 244 of the carrier substrate 241 other than the pressure relief portion 243 is greater than 0.005 and less than 0.8, within a controllable range, the overall thickness of the remaining area 244 will not be too large, so that the overall thickness of the carrier substrate 241 may be relatively small, achieving a lightweight design of the pressure relief structure 24.

Table 3 below provides information about pressure relief by the pressure relief portion 243 when the ratio C of the thickness of the pressure relief portion 243 to the thickness of the remaining area 244 of the carrier substrate 241 other than the pressure relief portion 243 is within various ranges:

**Table 3**

| No. | C | Results |
|---|---|---|
| 1 | 0.0005 | Pressure relief portion 243 releases pressure in advance |
| 2 | 0.001 | Pressure relief portion 243 releases pressure normally |
| 3 | 0.01 | Pressure relief portion 243 releases pressure normally |
| 4 | 0.1 | Pressure relief portion 243 releases pressure normally |
| 5 | 0.15 | Pressure relief portion 243 releases pressure normally |
| 6 | 0.2 | Pressure relief portion 243 releases |
| | | pressure normally |
| 7 | 0.9 | Pressure relief portion 243 cannot be opened |
| 8 | 1 | Pressure relief portion 243 cannot be opened |

It can be known from Table 3 that when C is less than 0.005, the pressure relief portion 243 releases pressure in advance due to its excessively small thickness, and cannot release pressure according to the set pressure relief condition, resulting in premature pressure relief. When C is greater than 0.8, the pressure relief portion 243 cannot be opened normally due to its excessively large thickness. At this time, the remaining area 244 of the carrier substrate 241 other than the pressure relief portion 243 may deform to exceed the safety threshold of its deformation, so that the pressure relief structure 24 fails to work, and the battery 100 may be in danger of detonation.

In this way, the ratio of the thickness of the pressure relief portion 243 to the thickness of the remaining area 244 of the carrier substrate 241 other than the pressure relief portion 243 is controlled to ensure that the pressure relief portion 243 is able to release pressure normally according to a set pressure relief condition, preventing the remaining area 244 of the carrier substrate 241 from exceeding a safety threshold of its deformation and detonating before the pressure relief portion 243 releases pressure during deformation of the pressure relief structure 24 while ensuring that the pressure relief structure 24 may not be too thin or too thick, which causes the pressure relief structure 24 to fail to work and affects the safety of the battery 100.

In some embodiments, the thickness of the pressure relief portion 243 ranges from 0.01 mm to 0.5 mm, and the thickness of the carrier substrate 241 in the remaining area ranges from 0.2 mm to 2 mm.

The specific range of the thickness of the pressure relief portion 243 is limited to avoid the disadvantages that it is difficult for the manufacturing process to meet the demands of the pressure relief portion 243 that is excessively, and the excessively thin pressure relief portion 243 is prone to crack due to expansion and extrusion in the process of manufacture and transportation; and to prevent the pressure relief portion 243 and the carrier substrate 241 from being too thick to break through by a gas, so as to ensure that the pressure relief portion 243 can effectively release pressure in a timely manner.

Table 4 below provides information about pressure relief by the pressure relief portion 243 when the thickness of the pressure relief portion 243, A, B and C are within various ranges:

**Table 4**

| No. | Thickness (mm) of Pressure Relief Portion 243 | A | B | C | Results |
|---|---|---|---|---|---|
| 1 | 0.08 | 8 × 10⁻⁶ | 4 × 10⁻⁴ | 0.1 | Pressure relief structure 24 releases pressure normally |
| 2 | 0.1 | 0.04 | 0.01 | 0.15 | Pressure relief structure 24 releases pressure abnormally |
| 3 | 0.5 | 0.001 | 0.01 | 0.2 | Pressure relief structure 24 releases pressure normally |
| 4 | 0.4 | 0.001 | 0.01 | 0.2 | Pressure relief structure 24 releases pressure normally |
| 5 | 0.05 | 8 × 10⁻⁶ | 1 × 10⁻⁴ | 0.1 | Pressure relief structure 24 releases pressure normally |
| 6 | 0.18 | 5 × 10⁻⁶ | 1 × 10⁻⁶ | 0.1 | Pressure relief structure 24 releases pressure abnormally |
| 7 | 0.3 | 8 × 10⁻⁶ | 1 × 10⁻⁴ | 0.1 | Pressure relief structure 24 releases pressure normally |
| 8 | 0.2 | 0.002 | 0.12 | 0.1 | Pressure relief structure 24 releases pressure abnormally |
| 9 | 0.05 | 0.0002 | 0.06 | 0.1 | Pressure relief structure 24 releases pressure normally |
| 10 | 0.3 | 0.002 | 0.00375 | 0.001 | Pressure relief structure 24 releases pressure abnormally |
| 12 | 0.2 | 0.00135 | 0.0025 | 0.9 | Pressure relief structure 24 releases pressure abnormally |
| 13 | 0.05 | 0.0003378 | 0.000625 | 0.2 | Pressure relief structure 24 releases pressure normally |

It can be known from Table 4 that the thickness of the pressure relief portion 243 meets the interval of 0.01 mm to 0.5 mm, and the ratios of A, B and C meet the specified intervals set in the foregoing embodiments, so that the pressure relief portion 243 can be opened normally. The manufacturing process is difficult to meet the demands of the pressure relief portion 243 having a thickness of less than 0.01 mm, and the pressure relief portion 243 is prone to crack due to expansion and extrusion during manufacture and transportation.

When A is within the interval of (5.6 × 10⁻⁶, 0.028), the pressure relief portion 243 detonates normally; if A is less than 5.6 × 10⁻⁶, the pressure relief portion is prone to detonate in advance due to cyclic gas generation in the life cycle of the battery 100; and if A is greater than 0.028, the pressure relief portion is difficult to detonate in case of thermal runaway of the battery 100.

When B is within the interval (5 × 10⁻⁵, 0.1), the pressure relief portion 243 may detonate normally; if B is less than 5 × 10⁻⁵, the pressure relief portion is prone to detonate in advance due to gas cyclic generation in the life cycle of the battery 100; and if 5 × 10⁻⁵ is larger than 0.1, the pressure relief portion is difficult to detonate in case of thermal runaway of the battery 100.

When C is within the interval of (0.005, 0.8), the pressure relief portion 243 may detonate normally; if C is less than 0.005, the pressure relief portion is prone to detonate in advance due to cyclic gas generation in the life cycle of the battery 100; if C is greater than 0.8, the pressure relief portion is difficult to detonate in case of thermal runaway of the battery 100.

In some embodiments, the carrier substrate 241 is provided with a recess, the bottom wall of the recess forming the pressure relief portion 243.

A certain area of the carrier substrate 241 is thinned locally to form the recess, and the bottom wall of the recess forms the pressure relief portion 243, i.e., after the location of the pressure relief portion 243 of the carrier substrate 241 is determined, this area of the carrier substrate 241 is thinned to form the recess on the carrier substrate 241, thus making the structure of the carrier substrate 241 relatively simple.

Specifically, the recess may be formed by sinking from the outside of the battery 100 to the inside of the battery 100, and the recess may be located on any side face of the battery 100, so that the thickness of the bottom wall of the recess is less than that of the remaining area 244 of the carrier substrate 241. In case of thermal runaway of the battery 100, the internal high-pressure gas may crush the bottom wall of the recess, so that the high-pressure gas is guided to leak from the pressure relief portion 243 of the recess.

It can be understood that in order to ensure normal pressure relief by the pressure relief portion 243, the pressure relief portion 243 must not be shielded during pressure relief. However, during production of the battery 100, there may be a case where a surface provided with the pressure relief portion 243 is placed on a flat bottom plate. In this case, even if the pressure relief portion 243 is opened due to thermal runaway of the battery 100, the flat bottom plate will completely block the pressure relief portion 243, resulting in a failure of pressure relief, which in turn arouses safety accidents, for example, explosion of the battery 100.

In order to solve the above problem, in some embodiments, the pressure relief structure 24 further includes a support assembly. The support assembly is arranged facing the carrier substrate 241, and at least one pressure relief channel is formed between the pressure relief portion 243 and the support assembly.

The support assembly is of a supporting structure, and may be provided in a circular shape, a rectangular shape or any shape. The support assembly and the carrier substrate 241 may be arranged in a non-fitting manner, thus creating a certain space to form the pressure relief channel. Alternatively, a through hole is formed in the support assembly and communicates with the pressure relief portion 243 to form the pressure relief channel for pressure relief of the gas discharged by the pressure relief portion 243.

Owing to the existence of the pressure relief channel, the internal space of the battery 100 may directly communicate with the outside air after the pressure relief portion 243 is opened. The pressure relief channel is not limited in shape. Similarly, the through hole on the support assembly is not limited in shape, either.

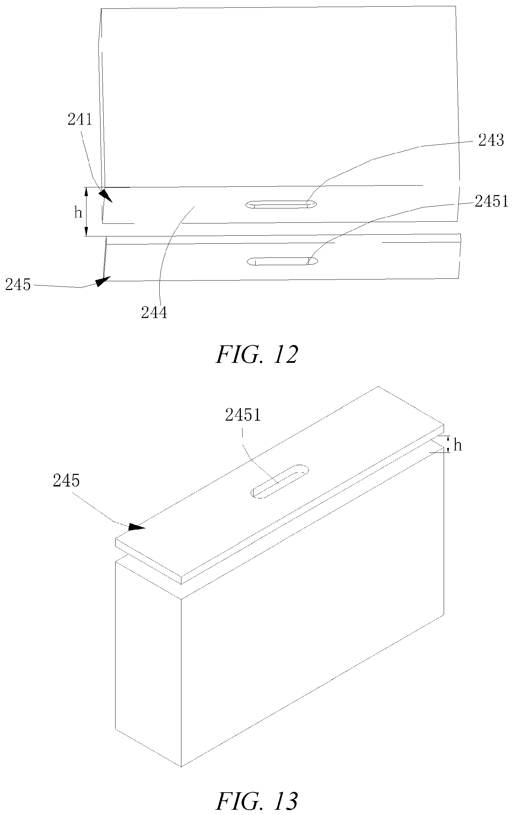

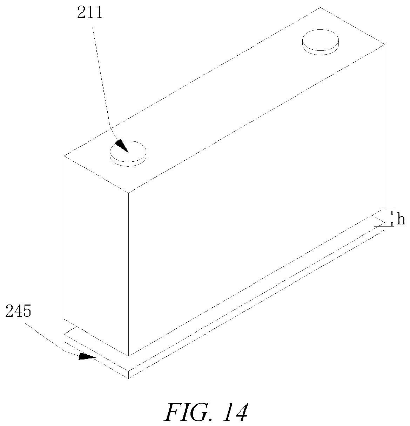

In some embodiments, as shown in FIGS. 12 to 14, the support assembly includes an isolation board 245. The isolation board 245 faces the carrier substrate 241 and is spaced apart therefrom. A first pressure relief channel is formed between the isolation board 245 and the pressure relief portion 243. The pressure relief channel includes the first pressure relief channel.

The isolation board 245 is configured to isolate the carrier substrate 241 from other structures. If it is necessary to place the side of the battery 100 with the pressure relief portion 243 on a plane, the isolation board 245 is arranged therebetween for isolation. The isolation board 245 and the carrier substrate 241 are spaced apart to form an open space, and the space serves as the first pressure relief channel of the pressure relief portion 243 for pressure relief of the gas discharged by the pressure relief portion 243.

The support assembly further includes a support member, and the support member is supported and arranged between the isolation board 245 and the carrier substrate 241.

The support member may be a support pillar having a certain height or a foot pad, or formed by gluing, so as to ensure that the isolation board 245 and the carrier substrate 241 are spaced apart to form the first pressure relief channel.

In this way, the isolation board 245 and the support member are arranged to ensure that the gas discharged by the pressure relief portion 243 may be released normally via the space between the isolation board 245 and the carrier substrate 241 in any state.

In some embodiments, as shown in FIGS. 12 to 14, the isolation board 245 is provided with a gas vent 2451 that is formed facing the pressure relief portion 243 in a through manner. A second pressure relief channel is formed between the gas vent 2451 and the pressure relief portion 243. The pressure relief channel includes the second pressure relief channel.

The isolation board 245 itself is provided with the gas vent 2451. The gas vent 2451 communicates with the pressure relief portion 243 to form the second pressure relief channel for pressure relief by the pressure relief portion 243. A part of an overheated gas in the battery 100 discharged from the pressure relief portion 243 is discharged into the atmosphere via the first pressure relief channel, and the other part is discharged from the gas vent 2451 into the atmosphere via the second pressure relief channel to ensure smooth pressure relief.

In some embodiments, as shown in FIGS. 12 to 14, the first pressure relief channel has a preset height h in the thickness direction of the pressure relief portion 243, and the preset height h decreases as an orthographic projection area of the gas vent 2451 onto the pressure relief portion 243 increases.

The orthographic projection refers to projections of parallel projection lines perpendicular to a projection plane, i.e., the gas vent 2451 is projected onto the pressure relief portion 243 in the thickness direction of the pressure relief portion 243, so as to determine the relative size of the gas vent 2451 to the pressure relief portion 243.

The preset height h is the value of h shown in FIGS. 12 to 14. When the orthographic projection area of the gas vent 2451 onto the pressure relief portion 243 is less than 1, it means that the gas vent 2451 is smaller than the pressure relief portion 243. At this time, the gas vent 2451 has insufficient pressure relief capacity, and the preset height h should be appropriately increased to ensure that the pressure relief portion 243 can release pressure normally.

When the orthographic projection area of the gas vent 2451 onto the pressure relief portion 243 is greater than or equal to 1, it means that the gas vent 2451 is larger than the pressure relief portion 243. At this time, the gas vent 2451 has strong pressure relief capability, and the preset height h may be appropriately reduced to ensure a compact structure of the pressure relief structure 24.

Specifically, in an embodiment, the relationship between the preset height h and the area of the gas vent 2451 is described as: h ≥ -3 × (s/S) + 3, in which h represents the preset height h, s represents the orthographic projection area of the gas vent 2451 onto the pressure relief portion 243, and S represents the pressure relief area of the pressure relief portion 243.

When s/S is 0, i.e., the isolation board 245 is not perforated or the gas vent 2451 is completely blocked up, the preset height h should be greater than 3 mm to ensure normal pressure relief by the pressure relief portion 243.

When s/S ≥ 1, i.e., the projected area of the gas vent 2451 onto the pressure relief portion 243 is of the same size as the pressure relief portion 243 or larger than the pressure relief portion 243, normal pressure relief by the pressure relief portion 243 can be ensured even if the preset height h is 0.

In this way, a complementary relationship is formed between the first pressure relief channel and the second pressure relief channel. When the first pressure relief channel or the second pressure relief channel is too small, the first pressure relief channel and the second pressure relief channel release pressure in parallel, and when either of the first pressure relief channel and the second pressure relief channel is enough for the pressure relief portion 243 to release pressure, the other one may be omitted.

In another aspect, some embodiments of the present application further provide a battery cell 20, including a housing 22 and a carrier substrate 241 in the pressure relief structure 24 described above. The carrier substrate 241 is configured to form a side face of any side of the housing 22.

In yet another aspect, some embodiments of the present application further provide a battery 100, including an enclosure 10 and a carrier substrate 241 in the pressure relief structure 24 described above. The carrier substrate 241 is configured to form a side face of any side of the enclosure 10.

In still another aspect, some embodiments of the present application further provide a power consuming device, including the battery 100 described above. The battery 100 is configured to supply electric energy.

According to an embodiment of the present application, referring to FIGS. 2 to 4, 5 and 12, a pressure relief structure 24 of a battery 100 is provided, including a carrier substrate 241. A relatively thin pressure relief portion 243 is arranged in the center of the carrier substrate 241. An outer surface of the battery 100 is further provided with an electrode terminal 211. The electrode terminal 211 may be arranged on one side of the carrier substrate 241 or on other side faces of the battery 100. The thickness of the pressure relief portion 243 and A, B and C described in the above embodiments are controlled to prevent the disadvantages that during deformation of the pressure relief structure 24, the carrier substrate 241 has exceeded a safety threshold of its deformation and detonated before the pressure relief portion 243 releases pressure while preventing the pressure relief portion from being too thin or too thick, which causes the pressure relief structure 24 to fail to work and affects the safety of the battery 100. At the same time, the isolation board 245 is arranged on an opposite side of the carrier substrate 241, and two pressure relief channels are formed between the isolation board and the carrier substrate 241, so as to ensure that the pressure relief portion 243 is not blocked and can release pressure normally.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims.

## Claims

1. A pressure relief structure, comprising a carrier substrate, the carrier substrate having a pressure relief portion and a remaining area other than the pressure relief portion, with the thickness of the pressure relief portion being smaller than that of the remaining area; and
the ratio of the thickness of the pressure relief portion to the length of the carrier substrate in a first direction being denoted as A, and the ratio of the thickness of the pressure relief portion to the width of the carrier substrate in a second direction being denoted as B,
wherein the pressure relief structure meets at least one of the conditions 5.6 × 10⁻⁶ < A < 0.028 and 5 × 10⁻⁵ < B < 0.1, and the first direction, the second direction and a thickness direction of the pressure relief portion intersect with each other.

2. The pressure relief structure according to claim 1, wherein the ratio of the thickness of the pressure relief portion to the thickness of the remaining area is C, where 0.005 < C < 0.8.

3. The pressure relief structure according to claim 1 or 2, wherein the thickness of the pressure relief portion ranges from 0.01 mm to 0.5 mm, and the thickness of the remaining area ranges from 0.2 mm to 2 mm.

4. The pressure relief structure according to any one of claims 1-3, wherein the carrier substrate is provided with a recess, a bottom wall of the recess forming the pressure relief portion.

5. The pressure relief structure according to any one of claims 1-4, further comprising a support assembly, the support assembly being arranged facing the carrier substrate, and at least one pressure relief channel being formed between the pressure relief portion and the support assembly.

6. The pressure relief structure according to claim 5, wherein the support assembly comprises an isolation board, the isolation board facing the carrier substrate and being spaced apart from the carrier substrate, a first pressure relief channel is formed between the isolation board and the pressure relief portion, and the pressure relief channel comprises the first pressure relief channel.

7. The pressure relief structure according to claim 6, wherein the support assembly further comprises a support member, the support member being arranged between the isolation board and the carrier substrate.

8. The pressure relief structure according to claim 6, wherein a gas vent is arranged to extend through the isolation board and face the pressure relief portion, a second pressure relief channel is formed between the gas vent and the pressure relief portion, and the pressure relief channel comprises the second pressure relief channel.

9. The pressure relief structure according to claim 8, wherein the first pressure relief channel has a preset height in the thickness direction of the pressure relief portion; and
the preset height decreases as an orthogonal projection area of the gas vent onto the pressure relief portion increases.

10. The pressure relief structure according to claim 9, wherein a relationship between the preset height and the orthographic projection area of the gas vent is described as: h ≥ -3 × (s/S) + 3,
in which h represents the preset height, s represents the orthographic projection area of the gas vent onto the pressure relief portion, and S represents a pressure relief area of the pressure relief portion.

11. A battery cell, comprising a housing and a carrier substrate of a pressure relief structure according to any one of claims 1-10, the carrier substrate being configured to form a side face of any side of the housing.

12. A battery, comprising an enclosure and a carrier substrate of a pressure relief structure according to any one of claims 1-10, the carrier substrate being configured to form a side face of any side of the enclosure.

13. A power consuming device, comprising a battery according to claim 12, the battery being configured to provide electric energy.
